# EUROPEAN PATENT APPLICATION

(11) **EP 4 489 494 A1**
(43) Date of publication of application: **08.01.2025**
(21) Application number: 22929861.7
(22) Date of filing: 04.03.2022
(51) Int. Cl.: H04W 72/04, H04W 16/28, H04W 28/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/009456
(87) International publication number: WO 2023/166717

(57) **Abstract**

A terminal according to one aspect of the present disclosure includes a receiving section that receives first configuration information related to a first hybrid automatic repeat request acknowledgement (HARQ-ACK), second configuration information related to a second HARQ-ACK or a scheduling request (SR), and third configuration information related to simultaneous transmission of physical uplink control channels (PUCCHs) using a plurality of panels, and a control section that determines, based on the first configuration information, the second configuration information, and the third information, a PUCCH resource to which the first HARQ-ACK and the second HARQ-ACK or the SR in a same time domain are mapped. According to one aspect of the present disclosure, even when UL transmission is performed by using a plurality of panels, it is possible to appropriately control the UL transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, a UE can use one of a plurality of panels (or a plurality of beams) for uplink (UL) transmission. For Rel. 18 (or later versions), it is studied that simultaneous UL transmission (for example, simultaneous multi-panel UL transmission (SiMPUL)) using a plurality of panels is supported for one or more transmission/reception points (TRPs) to improve UL throughput/reliability.

However, how to control UL transmission using a plurality of panels (for example, simultaneous UL transmission) has not been sufficiently studied. Unless the UL transmission using the plurality of panels is appropriately performed, degradation in system performance, such as throughput reduction, may occur.

Thus, an object of the present disclosure is to provide a terminal, a radio communication method, and a base station that can appropriately control UL transmission even when the UL transmission is performed by using a plurality of panels.

### Solution to Problem

A terminal according to one aspect of the present disclosure includes a receiving section that receives first configuration information related to a first hybrid automatic repeat request acknowledgement (HARQ-ACK), second configuration information related to a second HARQ-ACK or a scheduling request (SR), and third configuration information related to simultaneous transmission of physical uplink control channels (PUCCHs) using a plurality of panels, and a control section that determines, based on the first configuration information, the second configuration information, and the third information, a PUCCH resource to which the first HARQ-ACK and the second HARQ-ACK or the SR in a same time domain are mapped.

### Advantageous Effects of Invention

According to one aspect of the present disclosure, even when UL transmission is performed by using a plurality of panels, it is possible to appropriately control the UL transmission.

### Brief Description of Drawings

[FIG. 1] FIGS. 1A to 1E are diagrams to show examples of PFs defined in Rel. 15.
[FIG. 2] FIGS. 2A and 2B are diagrams to show examples of a transmission scheme for simultaneous UL transmission using a plurality of panels for PUCCHs.
[FIG. 3] FIG. 3 is a diagram to show an example of the number of PUCCHs according to Option 1-1.
[FIG. 4] FIG. 4 is a diagram to show an example of multiplexing/mapping of CSIs according to Aspect 2-1.
[FIG. 5] FIG. 5A is a diagram to show an example of association between CSIs and PUCCH resources according to Option 2-2-0. FIG. 5B is a diagram to show an example of association between CSIs and PUCCH resources according to Option 2-2-1.
[FIG. 6] FIG. 6 is a diagram to show an example of association between CSIs and PUCCH resources according to Aspect 2-3.
[FIG. 7] FIG. 7 is a diagram to show an example of association between a plurality of HARQ-ACKs and PUCCH resources according to Choice 3-1-2.
[FIG. 8] FIG. 8 is a diagram to show an example of association between an SR/HARQ-ACK and PUCCH resources according to Choice 4-1-1-2.
[FIG. 9] FIG. 9 is a diagram to show an example of association between an SR/CSI and PUCCH resources according to Choice 5-1-2.
[FIG. 10] FIGS. 10A and 10B are diagrams to show examples of transmission of CSI and an HARQ-ACK according to a combination of Choices 6-1-1 and 6-2-1.
[FIG. 11] FIGS. 11A and 11B are diagrams to show examples of transmission of CSI and an HARQ-ACK according to a combination of Choices 6-1-1 and 6-2-2.
[FIG. 12] FIGS. 12A and 12B are diagrams to show examples of transmission of CSI and an HARQ-ACK according to a combination of Choices 6-1-2 and 6-2-2.
[FIG. 13] FIG. 13 is a diagram to show an example of a schematic structure of a radio communication system according to one embodiment.
[FIG. 14] FIG. 14 is a diagram to show an example of a structure of a base station according to one embodiment.
[FIG. 15] FIG. 15 is a diagram to show an example of a structure of a user terminal according to one embodiment.
[FIG. 16] FIG. 16 is a diagram to show an example of a hardware structure of the base station and the user terminal according to one embodiment.
[FIG. 17] FIG. 17 is a diagram to show an example of a vehicle according to one embodiment.

### Description of Embodiments

### (PUCCH Format)

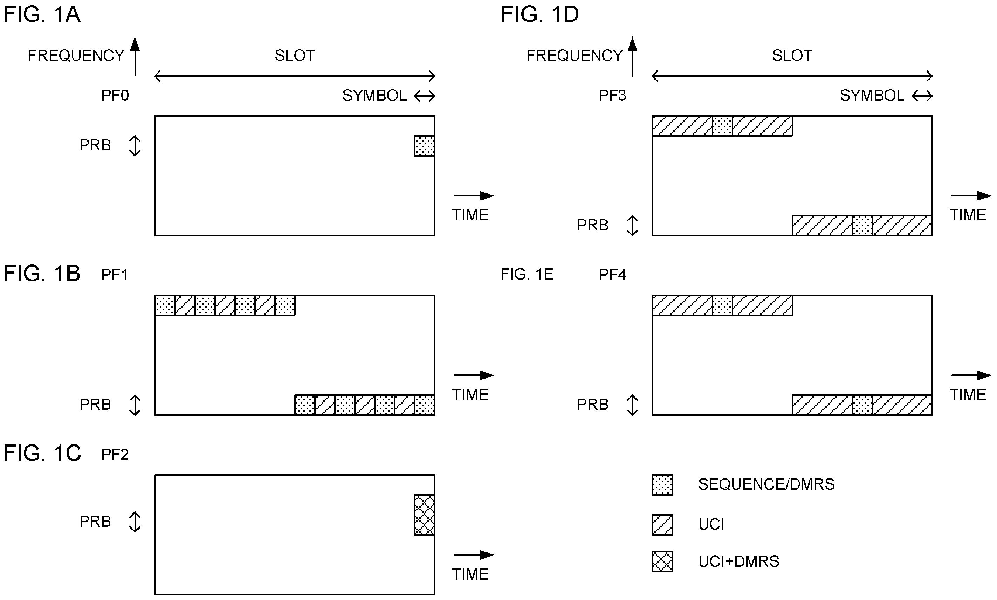

In NR, a configuration for an uplink control channel (for example, a PUCCH) (also referred to as a format, a PUCCH format (PF), or the like) is used for transmission of uplink control information (UCI). For example, as shown in FIGS. 1A to 1E, respectively, PFs 0 to 4 are supported in Rel-15 NR. Note that, in Rel. 17 (or later versions), the terms of PFs given below are merely examples and different terms may be used.

For example, PFs 0 and 1 are PFs used for transmission of UCI with 2 or less bits (up to 2 bits). For example, the UCI may be at least one of transmission confirmation information (also referred to as Hybrid Automatic Repeat reQuest-Acknowledgement (HARQ-ACK), acknowledgement (ACK), negative-acknowledgement (NACK), or the like) and a scheduling request (SR). PF 0 can be allocated to 1 or 2 symbols, and thus is also referred to as a short PUCCH. On the other hand, PF 1 can be allocated to 4 to 14 symbols, and thus is also referred to as a long PUCCH or the like. PF 0 uses a cyclic shift (CS) depending on a value of the UCI to transmit a sequence obtained by a cyclic shift of a base sequence, and thus is also referred to as a sequence-based PUCCH. In PF 1, a plurality of user terminals may be code-division multiplexed (CDMed) in identical physical resource blocks (PRBs) by time-domain block-wise spreading using at least one of a CS and a time domain (TD)-orthogonal cover code (OCC). PFs 0 and 1 may be mapped to 1 PRB.

PFs 2 to 4 are PFs used for transmission of UCI (for example, channel state information (CSI) or at least one of CSI, an HARQ-ACK, and an SR) with more than 2 bits. PF 2 can be allocated to 1 or 2 symbols, and thus is also referred to as a short PUCCH or the like. On the other hand, each of PFs 3 and 4 can be allocated to 4 to 14 symbols, and thus is also referred to as a long PUCCH or the like. In PF 4, a plurality of user terminals may be CDMed by using block-wise spreading before DFT (with a frequency domain (FD)-OCC). PFs 2 and 3 may be mapped to 1 to 16 PRBs. PF 4 may be mapped to 1 PRB.

Each of PFs 1 to 4 transmits UCI and a DMRS in a resource block allocated to a PUCCH, and thus is also referred to as a DMRS-based PUCCH. In each of PFs 1, 3, and 4, UCI and a DMRS are time-division multiplexed (TDMed) with each other. In PF 2, a DMRS is mapped for each 3 subcarries, and UCI and a DMRS are frequency-division multiplexed (FDMed) with each other.

Intra-slot frequency hopping may be applied to PF 1, PF 3, and PF 4. Let a length of the PUCCH be N*_{symb}*, and then the length before frequency hopping (first hop) may be floor(N*_{symb}*/2), and the length after frequency hopping (second hop) may be ceil(N_{symb}/2).

Waveforms of PF 0, PF 1, and PF 2 may be Cyclic Prefix (CP)-Orthogonal Frequency Division Multiplexing (OFDM). Waveforms of PF 3 and PF 4 may be Discrete Fourier Transform (DFT)-spread(s)-OFDM.

Allocation of a resource (for example, a PUCCH resource) used for transmission of the uplink control channel is performed by using higher layer signaling and/or downlink control information (DCI).

Specifically, one or more sets (PUCCH resource sets) each including one or more PUCCH resources are notified (configured) for a UE by higher layer signaling. For example, a user terminal may be notified of K (for example, 1 ≤ K ≤ 4) PUCCH resource sets from a network (for example, a base station). Each PUCCH resource set may include M (for example, 1 ≤ M ≤ 32) PUCCH resources.

The UE may determine a single PUCCH resource set (first PUCCH resource set), from among the K configured PUCCH resource sets, based on a payload size of UCI (UCI payload size, the number of UCI information bits). The UCI payload size may be the number of bits of UCI not including a cyclic redundancy check (CRC) bit.

The UE may determine a PUCCH resource used for transmission of the UCI, from among M PUCCH resources included in the determined PUCCH resource set, based on at least one of DCI and implicit information (also referred to as implicit indication information, an implicit index, or the like). For example, the implicit indication information may be a first CCE index of reception of a PDCCH for delivering the DCI.

Each PUCCH resource configured for the UE may include a value of at least one parameter (also referred to as field, information, or the like) of the following. Note that a range of a possible value for each parameter may be defined for each PUCCH format.
- Symbol (start symbol) in which PUCCH allocation is started
- Number of symbols allocated to PUCCH (period allocated to PUCCH) in slot
- Index of resource block (physical resource block (PRB)) from which PUCCH allocation is started
- Number of PRBs allocated to PUCCH
- Whether frequency hopping is enabled for PUCCH
- Indices of frequency resource and initial cyclic shift (CS) for second hop in case where frequency hopping is enabled
- Index of orthogonal cover code (OCC) in time domain (time-domain), length of OCC (also referred to as an OCC length, a spread rate, or the like) used for block-wise spreading before discrete Fourier transform (DFT)
- Index of OCC used for block-wise spreading after DFT

A low-power to average power ratio (low-PAPR) sequence is used for UCI of PF 0/PF 1 and a DMRS of PF 1/PF 3/PF 4. A pseudo-random sequence (Gold sequence) is used for a DMRS of PF 2.

### (simultaneous multi-panel UL transmission (SiMPUL))

For future radio communication systems (for example, Rel. 18 (or later versions)), it is studied that simultaneous UL transmission (for example, simultaneous multi-panel UL transmission (SiMPUL)) using a plurality of panels is supported for one or more transmission/reception points (TRPs) to improve UL throughput/reliability.

In the simultaneous UL transmission using a plurality of panels, the UE may perform transmission of a plurality of physical uplink control channels (PUCCHs).

The present disclosure will be described below by using, as an example thereof, a case where the number of the plurality of panels is two, but the number of panels may be 3 or greater. In other words, 2 as the number of panels may be interpreted as a number greater than or equal to 3.

As transmission schemes for the simultaneous UL transmission using the plurality of panels for the PUCCHs, Schemes 1 and 2 below are under study.

### {Scheme 1}

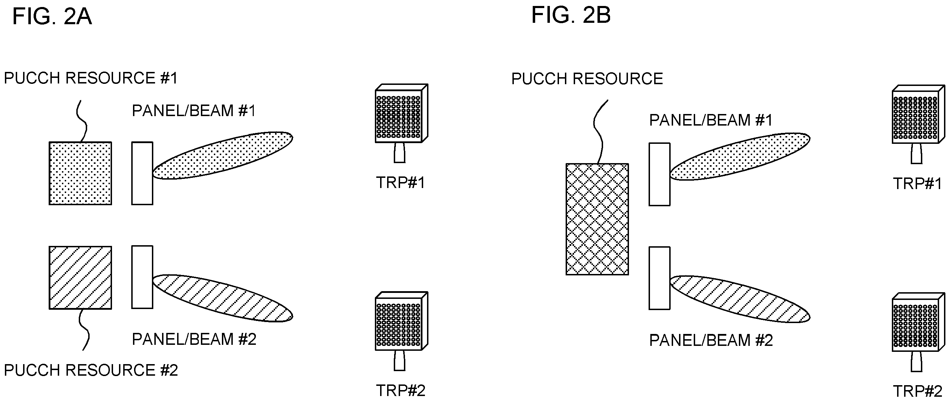

Two PUCCH resources overlap each other in a time domain, and transmitted simultaneously. Each of the two PUCCH resources is associated with one different panel/beam (see FIG. 2A). Each of two beams is transmitted to each TRP.

### {Scheme 2}

One PUCCH resource is simultaneously transmitted by using two panels/spatial relations. One PUCCH resource is associated with two panels/beams (see FIG. 2B). The two beams are transmitted to respective TRPs.

Note that Scheme 2 may be applied to repetition transmission (repetition) of an SFN (single frequency network) PUCCH.

In Rel. 17 (or earlier versions), when two PUCCHs/PUSCHs with different priorities are transmitted, the UE first eliminates overlap of a PUCCH/PUSCH transmission with a smaller (lower) priority index.

When multiplexing of UCIs with different priorities is supported, the UE firstly eliminates overlap of a PUCCH/PUSCH transmission with a larger (higher) priority index.

Secondly, the UE eliminates overlap between PUCCH transmissions with different priority indices.

Thirdly, the UE eliminates overlap between PUCCH and PUSCH transmissions with different priority indices.

When multiplexing of UCIs with different priorities is not supported, the UE may cancel/drop a PUCCH/PUSCH with a smaller priority index in accordance with a rule predefined by a specification.

However, when simultaneous transmission using a plurality of panels for a plurality of PUCCHs (for example, PUCCHs/UCIs with different priorities) is supported, operation for overlapping PUCCH transmissions by the UE is unclear. Unless this is made clear, degradation in system performance, such as throughput reduction, may occur.

Thus, the inventors of the present invention came up with the idea of a method for appropriately controlling UL transmission even when the UL transmission is performed by using a plurality of panels.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "supported," "configured," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, an antenna group, a UE capability value, a UE capability value set, a specific (pool) index included in a PUSCH configuration, a specific (pool) index included in a PUCCH configuration, a specific (pool) index included in an SRS configuration, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted. The UE capability value set may include, for example, a maximum number of SRS ports to be supported.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of spatial relation informations", and the like. The TCI state and the TCI may be interchangeably interpreted.

In the present disclosure, "drop," "end," "cancel," "puncture," "rate-match," "postpone," and the like may be interchangeably interpreted.

In each embodiment of the present disclosure, multi-DCI using multi-TRP being configured, a CORESET pool index (RRC parameter "coresetPoolIndex") being not provided, and a CORESET pool index (RRC parameter "coresetPoolIndex") of a first value (for example, 0) and a CORESET pool index (RRC parameter "coresetPoolIndex") of a second value (for example, 1) being provided for one or more first CORESETs and one or more second CORESETs, respectively, in an active BWP of a serving cell may be interchangeably interpreted.

Note that each embodiment of the present disclosure describes a PUCCH format denoted by an index for convenience, but the index of the PUCCH format is merely an example and is not limited to this. In other words, a PUCCH format of the present disclosure may be expressed by a function/characteristic of such a PUCCH format as that described above.

CSI, an HARQ-ACK, and an SR are described as UCI in the present disclosure, but these words may be appropriately and interchangeably interpreted.

### (Radio Communication Method)

A PUCCH resource of UCI (for example, an SR/HARQ-ACK/CSI) and a panel may be associated with each other, based on a specific method.

The association may be configured for a UE by using higher layer signaling (for example, RRC/MAC CE), the association may be indicated for the UE by using DCI, or the UE may be notified of the association by combining RRC/MAC CE/DCI.

A panel may be associated with a PUCCH resource, or may be associated with spatial relation information/TCI state of the PUCCH resource.

UCI (for example, an SR/HARQ-ACK/CSI report) and a panel may be associated with each other, based on a specific method.

The association may be configured for a UE by using higher layer signaling (for example, RRC/MAC CE), the association may be indicated for the UE by using DCI, or the UE may be notified of the association by combining RRC/MAC CE/DCI.

A panel may be associated with a PUCCH resource of UCI, or may be associated with at least one of a CSI report configuration, an SR configuration, and a PDCCH/PDSCH corresponding to HARQ-ACK information.

Each of the embodiments/aspects/options/choices in the present disclosure may be applied to use of at least one of single DCI using multi-TRP and multi-DCI using multi-TRP.

Each of the embodiments and drawings of the present disclosure below describes a case where PUCCHs/CSIs/HARQ-ACKs/SRs overlap each other in a time domain, but the overlap may mean that PUCCH resources fully overlap each other, may mean that at least parts of PUCCH resources overlap each other, or may mean that a time resource of a given PUCCH resource is fully included in a time resource of another PUCCH resource.

Each of the embodiments of the present disclosure below may be used in a case where Scheme 1/2 above is applied.

### <First Embodiment>

### (Analysis 1)

In Rel. 16/17 (or earlier versions), a UE may transmit up to two PUCCH resources in one slot.

If an HARQ-ACK feedback mode is not configured to be separate (for example, unless an RRC parameter "ackNackFeedbackMode" = separate), at least one of two PUCCH resources in 1 slot serves as PUCCH format 0 or 2.

These limitations are caused by the assumption that a use case where two long PUCCHs (for example, a PUCCH in 7 symbols and a PUCCH in 7 symbols) are time division multiplexed (TDMed) with each other in 1 slot is absent in PUCCHs of Rel. 15.

However, when simultaneous transmission using a plurality of panels for a plurality of PUCCHs (for example, PUCCHs/UCI with different priorities) is supported, whether these limitations are applied is unclear.

In a first embodiment, the number of PUCCHs (resources) possible to be transmitted by the UE will be described above.

When the UE supports simultaneous multi-panel transmission of PUCCHs, the number of PUCCHs allowed to be transmitted by the UE in one slot in a given CC (cell) may follow at least one of Options 1-0 and 1-1 below.

### <<Option 1-0>>

The UE may transmit up to M (M is a specific integer, for example, 2) PUCCHs in one slot in a given CC (cell), over a plurality of (for example, all the) panels.

In this case, at least one of the plurality of (for example, two) PUCCHs may be limited to a specific PUCCH format. For example, the specific PUCCH format may be a PUCCH format with a relatively small number of symbols (for example, PUCCH format 0/2, short PUCCH).

Limitation related to this PUCCH format may be applied only when a specific higher layer parameter is not configured to be a specific condition (for example, unless an RRC parameter "ackNackFeedbackMode" = separate).

### <<Option 1-1>>

The UE may transmit a total of N PUCCHs (N is an integer) in one slot in a given CC (cell).

N above may be an integer greater than 2.

For example, when PUCCH (simultaneous) transmission is performed in two panels, N may be 2 × M (M is a specific integer, for example, 2). For example, when PUCCH (simultaneous) transmission is performed in X panels, N may be X × M.

The UE may transmit, for PUCCHs associated with the same panel, up to two PUCCHs in different symbols in one slot in a given CC (cell).

At least one of two PUCCHs associated with the same panel in one slot may be a specific PUCCH format. For example, the specific PUCCH format may be a PUCCH format with a relatively small number of symbols (for example, PUCCH format 0/2, short PUCCH).

Limitation related to this PUCCH format may be applied, for example, only when multi-DCI using multi-TRP is configured and a specific higher layer parameter is not configured to be a specific condition (for example, unless an RRC parameter "ackNackFeedbackMode" = separate).

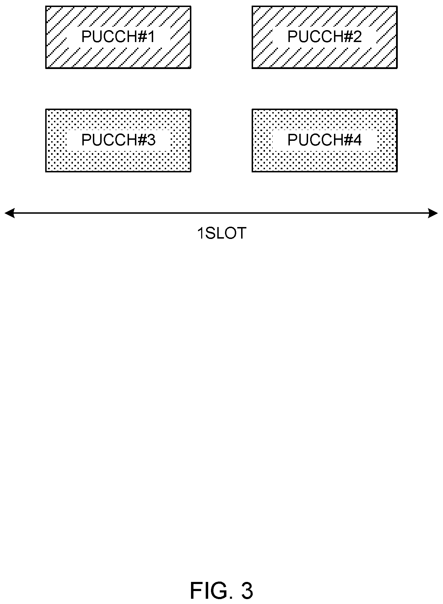

FIG. 3 is a diagram to show an example of the number of PUCCHs according to Option 1-1. In the example shown in FIG. 3, the UE transmits a total of four PUCCHs (PUCCHs #1 to #4) in one slot over two panels.

In the example shown in FIG. 3, in one slot, up to two PUCCHs are associated with one panel. Here, PUCCHs #1 and #2 are associated with panel #1, and PUCCHs #3 and #4 are associated with panel #2. Identical hatchings are applied to PUCCHs corresponding to the same panel. Hereinafter, in a diagram to show association related to PUCCHs/UCI, PUCCHs/UCI denoted by identical hatchings may mean that the PUCCHs/UCI are associated with the same panel.

According to the first embodiment above, even when simultaneous transmission using a plurality of panels is applied, it is possible to appropriately determine a maximum number of PUCCHs in one slot.

### <Second Embodiment>

### (Analysis 2)

In Rel. 16/17, if a UE is configured with PUCCH resources for a plurality of CSIs in one slot and is not configured with an RRC parameter (multi-CSI-PUCCH-ResourceList) related to a plurality of PUCCH resource lists for CSI, the UE determines two PUCCH resources in one slot in accordance with a priority of a CSI report.

In this case, the UE firstly determines a PUCCH resource (first resource) corresponding to a CSI report with a highest priority.

Secondly, the UE determines a PUCCH resource (second resource) corresponding to a CSI report with a highest priority, from among CSI reports corresponding to the remaining resources excluding the first resource.

When the first resource is PUCCH format 2, the remaining resources excluding the first resource serve as resources not overlapping the first resource in the slot.

When the first resource is PUCCH format 3 or 4, the remaining resources excluding the first resource serve as resources of PUCCH format 2 not overlapping the first resource in the slot.

In Rel. 16/17, if the UE is configured with PUCCH resources for a plurality of CSIs in one slot and is configured with an RRC parameter (multi-CSI-PUCCH-ResourceList) related to a plurality of PUCCH resource lists for CSI, the UE multiplexes all the CSI reports in one resource.

However, when simultaneous transmission using a plurality of panels for a plurality of PUCCHs is supported, UE operation is unclear in a case where a plurality of PUCCH resources associated with a plurality of panels for CSI are configured in one slot.

In a second embodiment, simultaneous transmission using a plurality of panels for PUCCHs for a plurality of CSIs will be described below.

A UE may support simultaneous multi-panel transmission of PUCCHs. Simultaneous multi-panel transmission of PUCCHs may be configured for the UE. The configuration may be performed by using a specific higher layer parameter.

If the UE is configured with a plurality of PUCCH resources for CSI in one slot, and a plurality of (for example, two) PUCCHs for a plurality of (for example, two) CSI reports are associated with the same panel, the UE may follow at least one of Choices 2-A-1 to 2-A-3 described below.

The UE may multiplex/map, in one PUCCH, a plurality of (for example, two) CSI reports associated with the same panel (Choice 2-A-1).

The UE need not multiplex/map, in one PUCCH, a plurality of (for example, two) CSI reports associated with the same panel (Choice 2-A-2).

Which of Choices 2-A-1 and 2-A-2 above is to be applied may be configured for the UE by using higher layer signaling (RRC/MAC CE) (Choice 2-A-3).

In Choice 2-A-3, the configuration may be performed for each panel.

If the UE is configured with a plurality of PUCCH resources for CSI in one slot, and a plurality of (for example, two) PUCCHs for a plurality of (for example, two) CSI reports are associated with different panels, the UE may follow at least one of Choices 2-B-1 to 2-B-3 described below.

The UE may multiplex/map, in one PUCCH, a plurality of (for example, two) CSI reports associated with different panels (Choice 2-B-1).

The UE need not multiplex/map, in one PUCCH, a plurality of (for example, two) CSI reports associated with different panels (Choice 2-B-2) .

Which of Choices 2-B-1 and 2-B-2 above is to be applied may be configured for the UE by using higher layer signaling (RRC/MAC CE) (Choice 2-B-3).

In Choice 2-B-3, the configuration may be performed for each panel/each panel pair.

### <<Aspect 2-1>>

The UE may support simultaneous multi-panel transmission of PUCCHs.

For the UE, a plurality of PUCCH resources for CSI may be configured in one slot.

The present aspect may be applied, for example, in a combination of Choices 2-A-1 and 2-B-1 above.

The UE may follow operation defined in an existing specification (for example, Rel. 16).

For example, the UE may determine one PUCCH resource, based on an RRC parameter (for example, multi-CSI-PUCCH-ResourceList) related to a plurality of PUCCH resource lists for CSI, in accordance with a specific rule. In the one determined PUCCH resource, the UE may multiplex/map a plurality of (for example, all the) CSIs.

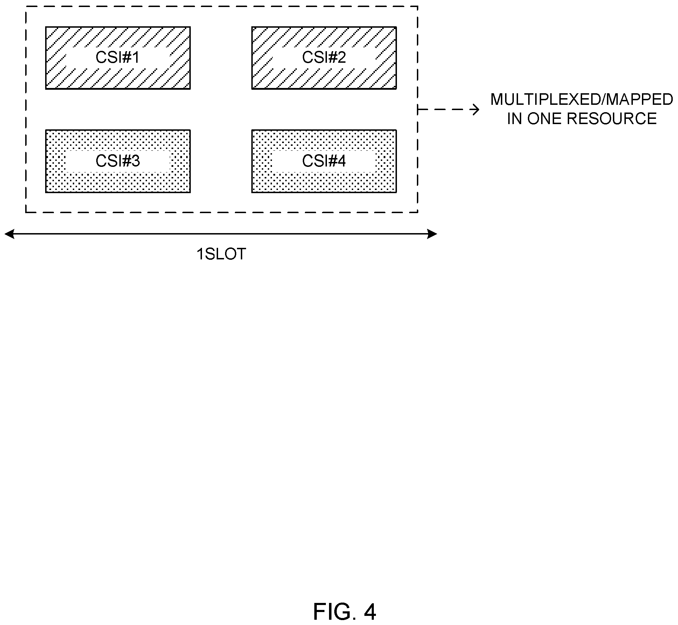

FIG. 4 is a diagram to show an example of the multiplexing/mapping of the CSIs according to Aspect 2-1. In the example shown in FIG. 4, for the UE, four CSI reports (CSI #1 to CSI #4) are configured in one slot. PUCCH resources corresponding to CSI #1 and CSI #2 are associated with a given panel (panel #1), and PUCCH resources corresponding to CSI #1 and CSI #2 are associated with another panel (panel #2).

In the example shown in FIG. 4, the UE multiplexes/maps and transmits CSI #1 to CSI #4 in one resource.

### <<Aspect 2-2>>

The UE may support simultaneous multi-panel transmission of PUCCHs.

For the UE, a plurality of PUCCH resources for CSI may be configured in one slot.

The present aspect may be applied, for example, in a combination of Choices 2-A-2 and 2-B-2 above.

The UE may follow at least one of Options 2-2-0 and 2-2-1 below.

### {Option 2-2-0}

The UE may determine a plurality of (for example, two) PUCCH resources for CSI reports over a plurality of (for example, all the) panels.

The UE may determine a PUCCH resource (first resource) corresponding to a CSI report with a highest priority, from among CSI reports associated with arbitrary panels.

The UE may determine a PUCCH resource (second resource) corresponding to a CSI report with a highest priority, from among CSI reports associated with arbitrary panels, the CSI reports corresponding to remaining resources excluding the first resource.

When the first resource is a first PUCCH format (for example, a relatively short PUCCH format, a short PUCCH, PUCCH format 2), the remaining resources excluding the first resource may be resources not overlapping the first resource in the slot. In this case, the remaining resources may be associated with arbitrary panels.

When the first resource is a second PUCCH format (relatively long PUCCH format, long PUCCH, PUCCH format 3/4), the remaining resources excluding the first resource may be resources of the first PUCCH format not overlapping the first resource in the slot. In this case, the remaining resources may be associated with arbitrary panels.

A resource other than the first and second resources above may be dropped.

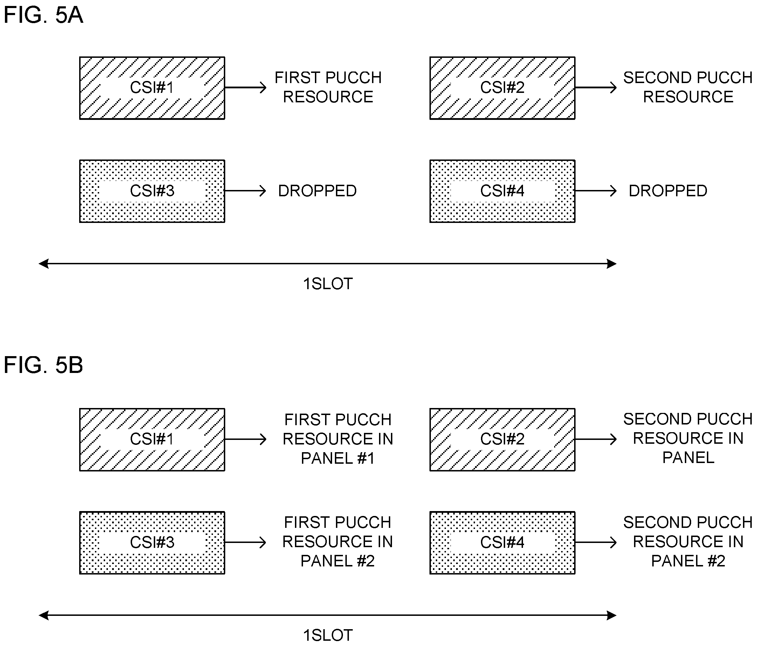

FIG. 5A is a diagram to show an example of association between CSIs and PUCCH resources according to Option 2-2-0. In the example shown in FIG. 5A, four CSI reports (CSI #1 to CSI #4) are configured in one slot. PUCCH resources corresponding to CSI #1 and CSI #2 are associated with a given panel (panel #1), and PUCCH resources corresponding to CSI #1 and CSI #2 are associated with another panel (panel #2). Priorities of the CSIs are as follows: CSI #1 > CSI #2 > CSI #3 > CSI #4.

In the example shown in FIG. 5A, the UE determines, over all the panels (panels #1 and #2), that a PUCCH resource corresponding to CSI #1 with a highest priority is a first resource. The UE determines, over all the panels (panels #1 and #2), that a PUCCH resource corresponding to CSI #2 with a highest priority, from among the remaining CSIs excluding the CSI corresponding to the first resource, is a second resource. In this case, CSI #3 and CSI #4 are dropped.

### {Option 2-2-1}

For each panel, the UE may determine a plurality of (for example, two) PUCCH resources in one slot for CSI reports.

For each panel, the UE may determine a PUCCH resource (first resource) corresponding to a CSI report with a highest priority, from among CSI reports associated with the panels.

For each panel, the UE may determine a PUCCH resource (second resource) corresponding to a CSI report with a highest priority, from among CSI reports associated with the panels, the CSI reports corresponding to remaining resources excluding the first resource.

When the first resource is a first PUCCH format (for example, a relatively short PUCCH format, a short PUCCH, PUCCH format 2), the remaining resources excluding the first resource may be resources not overlapping the first resource in the slot. In this case, the remaining resources may be associated with the same panel.

When the first resource is a second PUCCH format (relatively long PUCCH format, long PUCCH, PUCCH format 3/4), the remaining resources excluding the first resource may be resources of the first PUCCH format not overlapping the first resource in the slot. In this case, the remaining resources may be associated with the same panel.

For each panel, a resource other than the first and second resources above may be dropped.

FIG. 5B is a diagram to show an example of association between CSIs and PUCCH resources according to Option 2-2-1. In the example shown in FIG. 5B, four CSI reports (CSI #1 to CSI #4) are configured in one slot. PUCCH resources corresponding to CSI #1 and CSI #2 are associated with a given panel (panel #1), and PUCCH resources corresponding to CSI #1 and CSI #2 are associated with another panel (panel #2). Priorities of the CSIs are as follows: CSI #1 > CSI #2 > CSI #3 > CSI #4.

In the example shown in FIG. 5B, the UE determines, in panel #1, that a PUCCH resource corresponding to CSI #1 with a highest priority is a first resource. The UE determines, in panel #1, that a PUCCH resource corresponding to CSI #2 with a highest priority, from among the remaining CSIs excluding the CSI corresponding to the first resource, is a second resource.

In the example shown in FIG. 5B, the UE determines, in panel #2, that a PUCCH resource corresponding to CSI #3 with a highest priority is a first resource. The UE determines, in panel #2, that a PUCCH resource corresponding to CSI #4 with a highest priority, from among the remaining CSIs excluding the CSI corresponding to the first resource, is a second resource.

### <<Aspect 2-3>>

The UE may support simultaneous multi-panel transmission of PUCCHs.

For the UE, a plurality of PUCCH resources for CSI may be configured in one slot.

The present aspect may be applied, for example, in a combination of Choices 2-A-1 and 2-B-2 above.

For each panel, the UE may multiplex/map, in one resource, a plurality of (for example, all the) CSI reports associated with the same panel.

For each panel, the one resource may be determined, based on an RRC parameter (for example, multi-CSI-PUCCH-ResourceList) related to a PUCCH resource list for CSI associated with the panels, in accordance with a specific rule. In this case, the UE may follow at least one of Variations 2-3-1 and 2-3-2 below.

### {Variation 2-3-1}

A list for one resource may be configured for the UE. The list for one resource may include a resource over a plurality of (for example, all the) panels. For each panel, the one resource may be determined from resources associated with the panels in the list.

### {Variation 2-3-2}

For each panel, a list for one resource may be configured for the UE. For each panel, the one resource may be determined from a resource list associated with a panel.

In Aspect 2-3, the UE may simultaneously transmit a plurality of (for example, two) PUCCH resources associated with a plurality of (for example, two) panels. Each resource of the plurality of PUCCH resources may include one or more CSIs associated with the same panel.

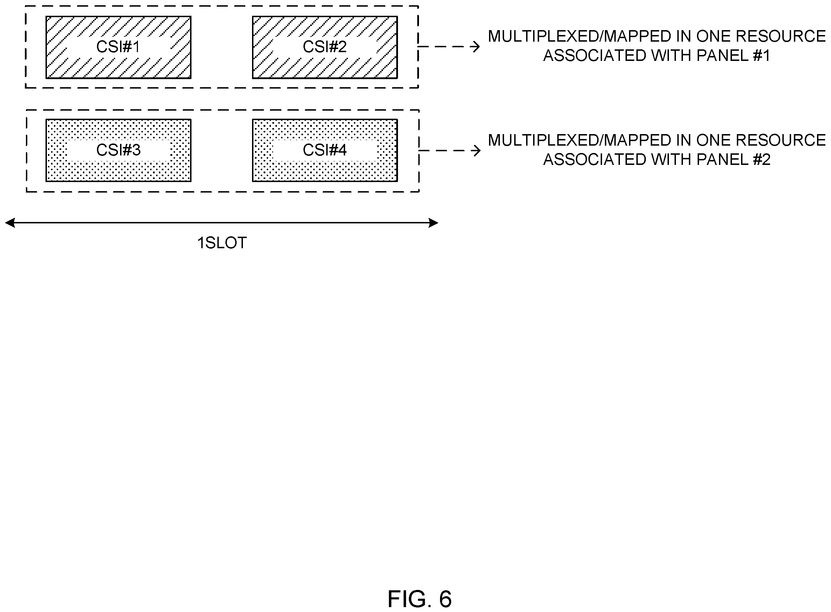

FIG. 6 is a diagram to show an example of association between CSIs and PUCCH resources according to Aspect 2-3. In the example shown in FIG. 6, four CSI reports (CSI #1 to CSI #4) are configured in one slot. PUCCH resources corresponding to CSI #1 and CSI #2 are associated with a given panel (panel #1), and PUCCH resources corresponding to CSI #1 and CSI #2 are associated with another panel (panel #2).

In the example shown in FIG. 6, the UE multiplexes/maps CSI #1 and CSI #2 in the resource associated with panel #1. The UE multiplexes/maps CSI #3 and CSI #4 in the resource associated with panel #2. The resources are determined from a resource list, based on a specific rule.

According to the second embodiment above, even when a plurality of CSIs overlap each other when simultaneous transmission using a plurality of panels for PUCCHs is performed, it is possible to appropriately transmit the plurality of CSIs.

### <Third Embodiment>

### (Analysis 3)

In Rel. 16/17, in a case excluding a case where a UE is configured with multi-DCI using multi-TRP and where an HARQ-ACK feedback mode is configured to be separate (for example, when an RRC parameter "ackNackFeedbackMode" = separate) (which may be referred to as Case 1), for a plurality of PUCCH resources including HARQ-ACK information indicated in the same slot, the UE multiplexes/maps all the pieces of HARQ-ACK information in one PUCCH resource.

In Rel. 16/17, in a case where the UE is configured with multi-DCI using multi-TRP and where the HARQ-ACK feedback mode is configured to be separate (which may be referred to as Case 2), for a plurality of PUCCH resources including HARQ-ACK information indicated in the same slot, the UE multiplexes/maps HARQ-ACK information associated with the same CORESET pool index, for each CORESET pool index (coresetPoolIndex), in one PUCCH resource. In this case, the UE multiplexes/maps, in different PUCCH resources, respective different pieces of HARQ-ACK information corresponding to different CORESET pool indices. The UE does not expect that a plurality of PUCCH resources for a plurality of CORESET pool indices overlap each other.

However, when simultaneous transmission using a plurality of panels for a plurality of PUCCHs is supported and Case 1/2 above applies, UE operation related to PUCCH resources for HARQ-ACK information is unclear.

In a third embodiment, simultaneous transmission using a plurality of panels for PUCCHs for a plurality of HARQ-ACKs will be described below.

The UE may support simultaneous multi-panel transmission of PUCCHs. Simultaneous multi-panel transmission of PUCCHs may be configured for the UE. The configuration may be performed by using a specific higher layer parameter.

The present embodiment may be applied, for example, when multi-DCI using multi-TRP is configured for the UE and a specific higher layer parameter is configured to be a specific condition (for example, when an RRC parameter "ackNackFeedbackMode" = separate).

For a plurality of PUCCH resources including HARQ-ACK information indicated in the same slot, the UE may multiplex/map HARQ-ACK information associated with the same CORESET pool index (coresetPoolIndex), for each CORESET pool index, in one PUCCH resource.

The UE may multiplex/map, in different PUCCH resources, respective different pieces of HARQ-ACK information corresponding to different CORESET pool indices.

Based on whether PUCCH resources (plurality of PUCCH resources) corresponding to each of a plurality of pieces of HARQ-ACK information indicated in the same slot are associated with the same CORESET pool index, the UE may assume whether the PUCCH resources overlap each other in a time domain.

The UE may follow at least one of Options 3-0 and 3-1 below.

### <<Option 3-0>>

The UE need not expect/assume that a plurality of (for example, two) PUCCH resources overlap each other (in the time domain), regardless of whether a plurality of (for example, two) PUCCH resources associated with different CORESET pool indices (coresetPoolIndex) are associated with the same panel or different panels.

### <<Option 3-1>>

If respective PUCCH resources (plurality of PUCCH resources) corresponding to a plurality of (for example, two) respective CORESET pool indices are associated with the same panel, the UE need not expect/assume that the plurality of PUCCH resources overlap each other (in the time domain).

If respective PUCCH resources (plurality of PUCCH resources) corresponding to a plurality of (for example, two) respective CORESET pool indices are associated with different panels, the UE may follow at least one of Choices 3-1-1 to 3-1-3 below.

### {Choice 3-1-1}

The UE need not expect/assume that the respective PUCCH resources (plurality of PUCCH resources) associated with different panels overlap each other (in the time domain).

### {Choice 3-1-2}

The UE may expect/assume that the respective PUCCH resources (plurality of PUCCH resources) associated with different panels overlap each other (in the time domain). In this case, the UE may simultaneously transmit the plurality of PUCCH resources (overlapping each other in the time domain).

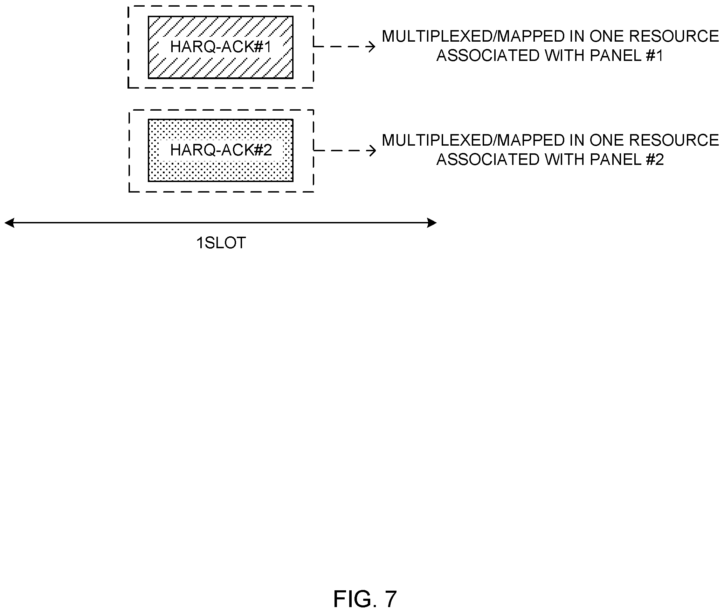

FIG. 7 is a diagram to show an example of association between a plurality of HARQ-ACKs and PUCCH resources according to Choice 3-1-2.

In the example shown in FIG. 7, the UE is configured with two HARQ-ACKs (HARQ-ACKs #1 and #2)/PUCCHs associated with different CORESET pool indices corresponding to different panels. In the example shown in FIG. 7, the UE transmits each HARQ-ACK in a resource associated with a CORESET pool index/panel corresponding to the HARQ-ACK.

### {Choice 3-1-3}

Which of Choices 3-1-1 and 3-1-2 above is to be applied may be configured for the UE by using higher layer signaling (RRC/MAC CE).

According to the third embodiment above, even when a plurality of HARQ-ACKs overlap each other when simultaneous transmission using a plurality of panels for PUCCHs is performed, it is possible to appropriately transmit the plurality of HARQ-ACKs.

### <Fourth Embodiment>

### (Analysis 4)

In Rel. 16/17, when a PUCCH resource including a positive SR overlaps a PUCCH resource using PUCCH format 0 including an HARQ-ACK, a UE multiplexes/maps and transmits the SR and the HARQ-ACK in a resource for the HARQ-ACK.

In Rel. 16/17, when a PUCCH resource using PUCCH format 0 including an SR overlaps a PUCCH resource using PUCCH format 1 including an HARQ-ACK, the UE drops the SR and transmits only the HARQ-ACK in an HARQ-ACK resource.

In Rel. 16/17, when a PUCCH resource using PUCCH format 1 including a positive SR overlaps a PUCCH resource using PUCCH format 1 including an HARQ-ACK, the UE maps and transmits the HARQ-ACK in an SR resource.

In Rel. 16/17, when a PUCCH resource using PUCCH format 1 including a negative SR overlaps a PUCCH resource using PUCCH format 1 including an HARQ-ACK, the UE maps and transmits the HARQ-ACK in an HARQ-ACK resource.

In Rel. 16/17, when a PUCCH resource including an SR overlaps a PUCCH resource using PUCCH format 2/3/4 including an HARQ-ACK, the UE multiplexes/maps and transmits the SR and the HARQ-ACK in an HARQ-ACK resource.

However, when simultaneous transmission using a plurality of panels for a plurality of PUCCHs is supported, UE transmission operation related to PUCCH resources for an SR and HARQ-ACK information is unclear.

In a fourth embodiment, simultaneous transmission using a plurality of panels for PUCCHs for an SR and an HARQ-ACK will be described below.

The UE may support simultaneous multi-panel transmission of PUCCHs. Simultaneous multi-panel transmission of PUCCHs may be configured for the UE. The configuration may be performed by using a specific higher layer parameter.

Based on whether a PUCCH resource for an SR and a PUCCH resource for an HARQ-ACK are associated with the same panel or different panels, and at least one of a PUCCH format corresponding to the PUCCH resource for the SR and a PUCCH format corresponding to the PUCCH resource for the HARQ-ACK, the UE may judge multiplexing/mapping of at least one of the HARQ-ACK and the SR.

### <<Aspect 4-1>>

When a PUCCH resource including a positive SR and a PUCCH resource using a specific PUCCH format (for example, PUCCH format 0) including an HARQ-ACK overlap each other (in a time domain), the UE may follow at least one of Options 4-1-0 and 4-1-1 below.

### {Option 4-1-0}

Regardless of whether the PUCCH resource for the SR and the PUCCH resource for the HARQ-ACK are associated with the same panel or different panels, the UE may multiplex/map and transmit the SR and the HARQ-ACK in the PUCCH resource for HARQ-ACK.

### {Option 4-1-1}

When the PUCCH resource for the SR and the PUCCH resource for the HARQ-ACK are associated with the same panel, the UE may multiplex/map and transmit the SR and the HARQ-ACK in the PUCCH resource for the HARQ-ACK.

When the PUCCH resource for the SR and the PUCCH resource for the HARQ-ACK are associated with different panels, the UE may follow at least one of Choices 4-1-1-1 to 4-1-1-3 below.

The UE may multiplex/map and transmit the SR and the HARQ-ACK in the PUCCH resource for the HARQ-ACK (Choice 4-1-1-1).

The UE need not multiplex/map the SR and the HARQ-ACK in the same resource (Choice 4-1-1-2). In this case, the UE may transmit the SR and the HARQ-ACK in the PUCCH resource for the SR and the PUCCH resource for the HARQ-ACK, respectively.

Which of Choices 4-1-1-1 and 4-1-1-2 above is to be applied may be configured for the UE by using higher layer signaling (RRC/MAC CE) (Choice 4-1-1-3).

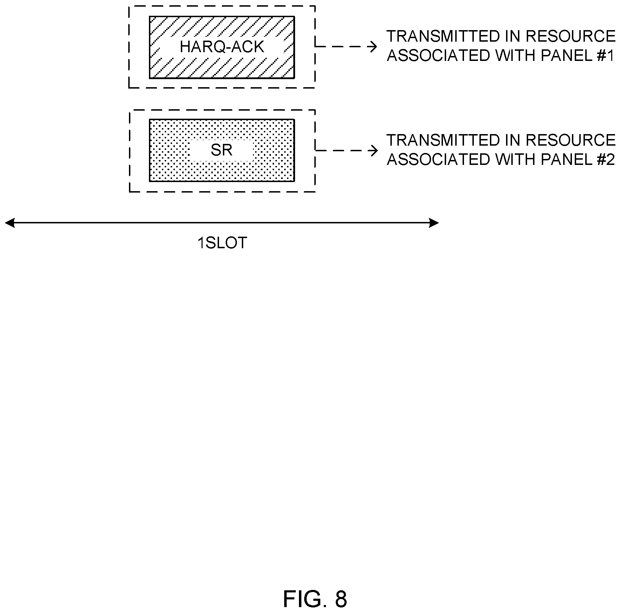

FIG. 8 is a diagram to show an example of association between an SR/HARQ-ACK and PUCCH resources according to Choice 4-1-1-2.

In the example shown in FIG. 8, the UE is configured with an SR and an HARQ-ACK corresponding to different panels. In the example shown in FIG. 8, the HARQ-ACK and the SR are associated with panel #1 and panel #2, respectively. In the example shown in FIG. 8, the UE transmits the HARQ-ACK in the PUCCH resource for the HARQ-ACK (that is, PUCCH resource associated with panel #1), and transmits the SR in the PUCCH resource for the SR (that is, PUCCH resource associated with panel #2).

### <<Aspect 4-2>>

When a PUCCH resource including an SR and a PUCCH resource using a specific PUCCH format (for example, PUCCH format 2/3/4) including an HARQ-ACK overlap each other (in a time domain), the UE may follow at least one of Options 4-1-0 and 4-1-1 above.

### <<Aspect 4-3>>

When a PUCCH resource using a first PUCCH format (for example, PUCCH format 0) including an SR and a PUCCH resource using a second PUCCH format (for example, PUCCH format 1) including an HARQ-ACK overlap each other (in a time domain), the UE may follow at least one of Options 4-3-0 and 4-3-1 below.

### {Option 4-3-0}

Regardless of whether the PUCCH resource for the SR and the PUCCH resource for the HARQ-ACK are associated with the same panel or different panels, the UE may drop the SR, and may transmit the HARQ-ACK (only the HARQ-ACK) in the PUCCH resource for the HARQ-ACK.

### {Option 4-3-1}

When the PUCCH resource for the SR and the PUCCH resource for the HARQ-ACK are associated with the same panel, the UE may drop the SR, and may transmit the HARQ-ACK (only the HARQ-ACK) in the PUCCH resource for the HARQ-ACK.

When the PUCCH resource for the SR and the PUCCH resource for the HARQ-ACK are associated with different panels, the UE may follow at least one of Choices 4-3-1-1 to 4-3-1-3 below.

The UE may drop the SR, and may transmit the HARQ-ACK (only the HARQ-ACK) in the PUCCH resource for the HARQ-ACK (Choice 4-3-1-1).

The UE may transmit the SR and the HARQ-ACK in the PUCCH resource for the SR and the PUCCH resource for the HARQ-ACK, respectively (Choice 4-3-1-2).

Which of Choices 4-3-1-1 and 4-3-1-2 above is to be applied may be configured for the UE by using higher layer signaling (RRC/MAC CE) (Choice 4-3-1-3).

### <<Aspect 4-4>>

When a PUCCH resource using a specific PUCCH format (for example, PUCCH format 1) including a positive SR and a PUCCH resource using a specific PUCCH format (for example, PUCCH format 1) including an HARQ-ACK overlap each other (in a time domain), the UE may follow at least one of Options 4-4-0 and 4-4-1 below.

### {Option 4-4-0}

Regardless of whether the PUCCH resource for the SR and the PUCCH resource for the HARQ-ACK are associated with the same panel or different panels, the UE may transmit the HARQ-ACK in the PUCCH resource for the SR.

### {Option 4-4-1}

When the PUCCH resource for the SR and the PUCCH resource for the HARQ-ACK are associated with the same panel, the UE may transmit the HARQ-ACK in the PUCCH resource for the SR.

When the PUCCH resource for the SR and the PUCCH resource for the HARQ-ACK are associated with different panels, the UE may follow at least one of Choices 4-4-1-1 to 4-4-1-3 below.

The UE may transmit the HARQ-ACK in the PUCCH resource for the SR (Choice 4-4-1-1).

In this case, the UE may transmit the SR and the HARQ-ACK in the PUCCH resource for the SR and the PUCCH resource for the HARQ-ACK, respectively (Choice 4-4-1-2).

Which of Choices 4-4-1-1 and 4-4-1-2 above is to be applied may be configured for the UE by using higher layer signaling (RRC/MAC CE) (Choice 4-4-1-3).

According to the fourth embodiment above, even when an HARQ-ACK and an SR overlap each other when simultaneous transmission using a plurality of panels for PUCCHs is performed, it is possible to appropriately transmit the HARQ-ACK/SR.

### <Fifth Embodiment>

### (Analysis 5)

In Rel. 16/17, when a PUCCH resource including an SR overlaps a PUCCH resource using PUCCH format 2/3/4 including CSI, a UE multiplexes/maps and transmits the SR and the CSI in a resource for the CSI.

However, when simultaneous transmission using a plurality of panels for a plurality of PUCCHs is supported, UE transmission operation related to PUCCH resources for an SR and CSI is unclear.

In a fifth embodiment, simultaneous transmission using a plurality of panels for PUCCHs for an SR and CSI will be described below.

The UE may support simultaneous multi-panel transmission of PUCCHs. Simultaneous multi-panel transmission of PUCCHs may be configured for the UE. The configuration may be performed by using a specific higher layer parameter.

When a PUCCH resource using a specific PUCCH format including an SR and a PUCCH resource using a specific PUCCH format (for example, PUCCH format 2/3/4) including CSI overlap each other (in a time domain), the UE may follow at least one of Options 5-0 and 5-1 below.

### {Option 5-0}

Regardless of whether the PUCCH resource for the SR and the PUCCH resource for the CSI are associated with the same panel or different panels, the UE may multiplex/map and transmit the SR and the CSI in the resource for the CSI.

### {Option 5-1}

Based on whether the PUCCH resource for the SR and the PUCCH resource for the CSI are associated with the same panel, the UE may judge mapping of at least one of the SR and the CSI.

When the PUCCH resource for the SR and the PUCCH resource for the CSI are associated with the same panel, the UE may multiplex/map and transmit the SR and the CSI in the resource for the CSI.

When the PUCCH resource for the SR and the PUCCH resource for the HARQ-ACK are associated with different panels, the UE may follow at least one of Choices 5-1-1 to 5-1-3 below.

The UE may multiplex/map and transmit the SR and the CSI in the resource for the CSI (Choice 5-1-1).

The UE need not multiplex/map the SR and the CSI in the same resource (Choice 5-1-2). In this case, the UE may transmit the CSI and the SR in the PUCCH resource for the CSI and the PUCCH resource for the SR, respectively.

Which of Choices 5-1-1 and 5-1-2 above is to be applied may be configured for the UE by using higher layer signaling (RRC/MAC CE) (Choice 5-1-3).

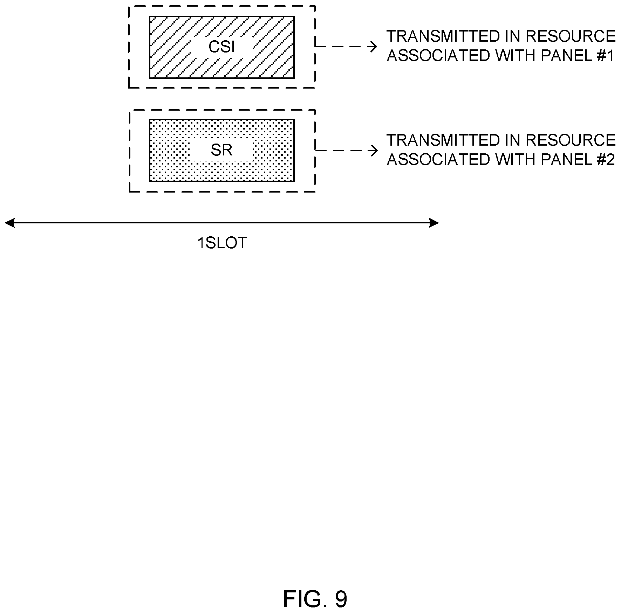

FIG. 9 is a diagram to show an example of association between an SR/CSI and PUCCH resources according to Choice 5-1-2.

In the example shown in FIG. 9, the UE is configured with an SR and CSI corresponding to different panels. In the example shown in FIG. 9, the CSI and the SR are associated with panel #1 and panel #2, respectively. In the example shown in FIG. 9, the UE transmits the CSI in the PUCCH resource for the CSI (that is, PUCCH resource associated with panel #1), and transmits the SR in the PUCCH resource for the SR (that is, PUCCH resource associated with panel #2).

According to the fifth embodiment above, even when CSI and an SR overlap each other when simultaneous transmission using a plurality of panels for PUCCHs is performed, it is possible to appropriately transmit the CSI/SR.

### <Sixth Embodiment>

### (Analysis 6)

In Rel. 16/17, when a PUCCH resource including CSI overlaps a PUCCH resource including an HARQ-ACK, a UE multiplexes/maps and transmits the HARQ-ACK and the CSI in one PUCCH resource if an RRC parameter related to simultaneous transmission of an HARQ-ACK and CSI ("simultaneousHARQ-ACK-CSI") is provided. If the RRC parameter related to simultaneous transmission of an HARQ-ACK and CSI ("simultaneousHARQ-ACK-CSI") is not provided, the UE drops the CSI, and transmits the HARQ-ACK (only the HARQ-ACK).

However, when simultaneous transmission using a plurality of panels for a plurality of PUCCHs is supported, UE transmission operation related to PUCCH resources for an HARQ-ACK and CSI is unclear.

In a sixth embodiment, simultaneous transmission using a plurality of panels for PUCCHs for an SR and CSI will be described below.

The UE may support simultaneous multi-panel transmission of PUCCHs. Simultaneous multi-panel transmission of PUCCHs may be configured for the UE. The configuration may be performed by using a specific higher layer parameter.

Based on whether a PUCCH resource for an HARQ-ACK and a PUCCH resource for CSI are associated with the same panel, the UE may judge mapping between at least one of the HARQ-ACK and the CSI.

### <<Aspect 6-1>>

Aspect 6-1 describes a case where a PUCCH resource including CSI overlaps a PUCCH resource including an HARQ-ACK and where a PUCCH resource for the HARQ-ACK and a PUCCH resource for the CSI are associated with the same panel.

In Aspect 6-1, the UE may follow at least one of Choices 6-1-1 to 6-1-3 below.

The UE may multiplex/map and transmit the CSI and the HARQ-ACK in one PUCCH resource (Choice 6-1-1).

The UE need not multiplex/map the CSI and the HARQ-ACK in the same resource (Choice 6-1-2). In this case, the UE may drop a CSI report, and may transmit the HARQ-ACK in one PUCCH resource.

Which of Choices 6-1-1 and 6-1-2 above is to be applied may be configured for the UE by using higher layer signaling (RRC/MAC CE) (Choice 6-1-3).

### <<Aspect 6-2>>

Aspect 6-2 describes a case where a PUCCH resource including CSI overlaps a PUCCH resource including an HARQ-ACK and where a PUCCH resource for the SR and a PUCCH resource for the CSI are associated with different panels.

In Aspect 6-2, the UE may follow at least one of Choices 6-2-1 to 6-2-3 below.

The UE may multiplex/map and transmit the CSI and the HARQ-ACK in one PUCCH resource (Choice 6-2-1).

The UE need not multiplex/map the CSI and the HARQ-ACK in the same resource (Choice 6-2-2). In this case, the UE may transmit the CSI and the HARQ-ACK in the PUCCH resource for the CSI and the PUCCH resource for the HARQ-ACK, respectively.

Which of Choices 6-2-1 and 6-2-2 above is to be applied may be configured for the UE by using higher layer signaling (RRC/MAC CE) (Choice 6-2-3).

Choices 6-1-1/6-1-2/6-1-3/6-2-1/6-2-2/6-2-3 above may be applied in combination.

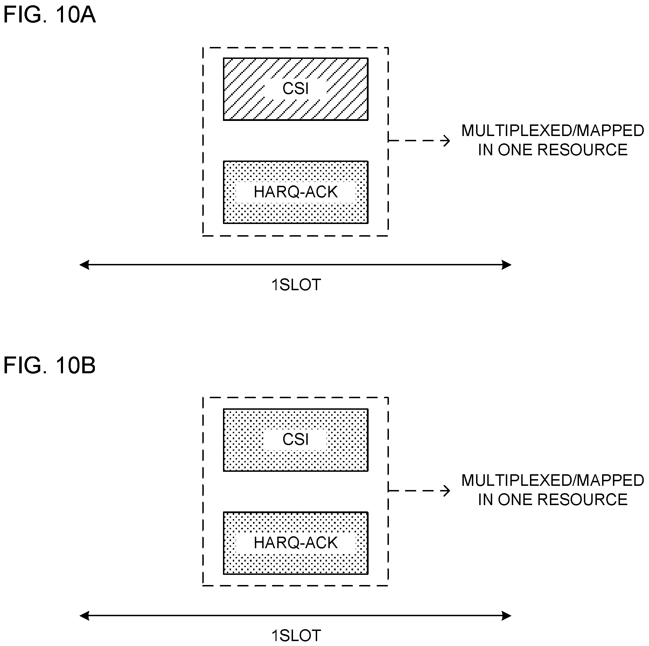

FIGS. 10A and 10B are diagrams to show examples of transmission of the CSI and the HARQ-ACK according to a combination of Choices 6-1-1 and 6-2-1. In each of the examples shown in FIGS. 10A and 10B, CSI and an HARQ-ACK are configured to overlap each other in one slot. In the example shown in FIG. 10A, the CSI and the HARQ-ACK are associated with different panels. In the example shown in FIG. 10B, the CSI and the HARQ-ACK are associated with the same panel.

In each of the examples shown in FIGS. 10A and 10B, the UE multiplexes/maps and transmits the CSI and the HARQ-ACK in one PUCCH resource.

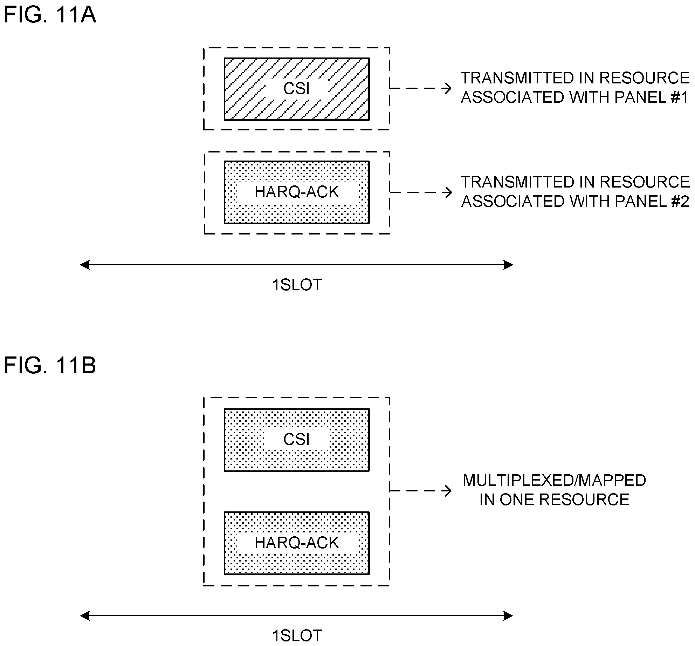

FIGS. 11A and 11B are diagrams to show examples of transmission of the CSI and the HARQ-ACK according to a combination of Choices 6-1-1 and 6-2-2. In each of the examples shown in FIGS. 11A and 11B, CSI and an HARQ-ACK are configured to overlap each other in one slot. In the example shown in FIG. 11A, the CSI and the HARQ-ACK are associated with respective different panels. In the example shown in FIG. 11B, the CSI and the HARQ-ACK are associated with the same panel.

In the example shown in FIG. 11A, the UE transmits the CSI and the HARQ-ACK in a PUCCH resource for the CSI and a PUCCH resource for the HARQ-ACK, respectively. In the example shown in FIG. 11B, the UE multiplexes/maps and transmits the CSI and the HARQ-ACK in one PUCCH resource.

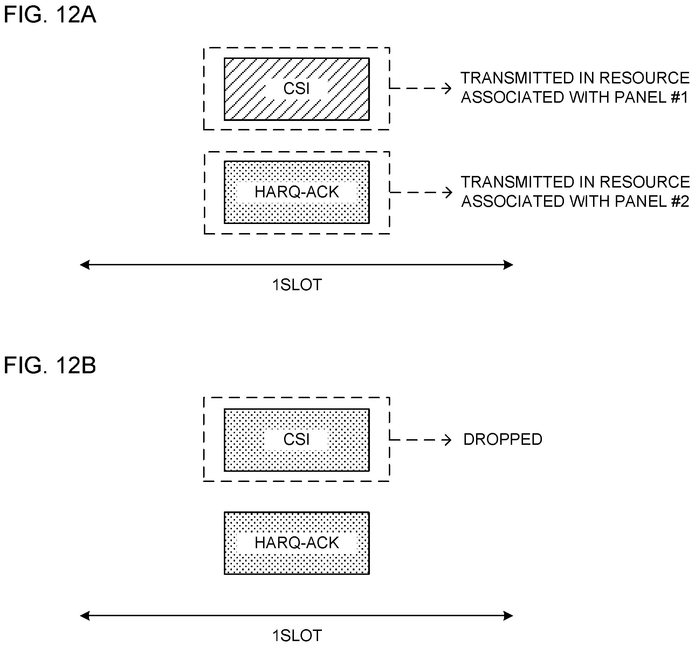

FIGS. 12A and 12B are diagrams to show examples of transmission of the CSI and the HARQ-ACK according to a combination of Choices 6-1-2 and 6-2-2. In each of the examples shown in FIGS. 12A and 12B, CSI and an HARQ-ACK are configured to overlap each other in one slot. In the example shown in FIG. 12A, the CSI and the HARQ-ACK are associated with respective different panels. In the example shown in FIG. 12B, the CSI and the HARQ-ACK are associated with the same panel.

In the example shown in FIG. 12A, the UE transmits the CSI and the HARQ-ACK in a PUCCH resource for the CSI and a PUCCH resource for the HARQ-ACK, respectively. In the example shown in FIG. 12B, the UE drops the CSI, and transmits the HARQ-ACK (only the HARQ-ACK).

In the sixth embodiment, when multiplexing/mapping between CSI and an HARQ-ACK is performed in one PUCCH resource, and a PUCCH resource for the CSI and a PUCCH resource for the HARQ-ACK indicated by using DCI overlap each other, the UE may multiplex/map and transmit the CSI and the HARQ-ACK in the PUCCH resource indicated by the DCI.

The DCI may be, for example, DCI for scheduling a PDSCH (scheduling DCI).

In the sixth embodiment, when multiplexing/mapping between CSI and an HARQ-ACK is performed in one PUCCH resource, and a PUCCH resource for the CSI and a PUCCH resource for the HARQ-ACK not indicated by using DCI overlap each other, the UE may multiplex/map and transmit the CSI and the HARQ-ACK in the PUCCH resource for the CSI.

For example, the HARQ-ACK may be an HARQ-ACK not corresponding to scheduling DCI, or may be an HARQ-ACK corresponding to a semi-persistent scheduling (SPS) PDSCH.

According to the sixth embodiment above, even when CSI and an HARQ-ACK overlap each other when simultaneous transmission using a plurality of panels for PUCCHs is performed, it is possible to appropriately transmit the CSI/HARQ-ACK.

### <Variations>

For configuration methods for Choices X-Y-3 (X in an integer from 2 to 6, Y is 1 or 2) in the second to sixth embodiments above, the respective choices may be configured based on different (independent) pieces of configuration information (signaling).

For configuration methods for Choices X-Y-3 in the second to sixth embodiments above, at least two of the choices (or all of the respective choices) may be configured based on common (joint) configuration information (signaling).

In each embodiment of the present disclosure, "associated with different panels" and "associated with the same panel" may be interchangeably interpreted.

The UE may be configured with at least one of Mode 1/Mode 2 below. The configuration may be performed based on reported UE capability information.
Mode 1: Time division multiplexed (TDMed)/spatial division multiplexed (SDMed)/frequency division multiplexed (FDMed) PUCCH repetition transmission (repetition) (for reliability enhancement)
Mode 2: PUCCH MIMO (Multi Input Multi Output) (for higher throughput/higher resource efficiency for PUCCH)

The PUCCH MIMO may be MIMO with a rank/layers greater than 1.

For Scheme 1 above, the UE may transmit UCI by using a plurality of panels (transmission panels) by using a plurality of PUCCHs. In this case, a PUCCH resource indicator (PRI) field included in DCI may be enhanced for indicating a plurality of PUCCH resources in one PUCCH resource set.

For Scheme 2 above, the UE may transmit UCI by using a plurality of panels (transmission panels) by using one PUCCH. In this case, one PRI field may be used for indication of one PUCCH resource. For one PUCCH resource, a plurality of layers/time resources/frequency resources may be configured.

Layer mapping for the UCI may be specified/applied, as layer mapping for a codeword.

### <Other Embodiments>

A higher layer parameter (RRC IE)/UE capability corresponding to a function (characteristics, feature) in at least one of the plurality of embodiments above may be defined. The UE capability may indicate support of this function.

The UE configured with the higher layer parameter (for enabling the function) corresponding to the function may perform the function. "The UE not configured with the higher layer parameter corresponding to the function does not perform the function (for example, follows Rel. 15/16/17)" may be defined.

The UE that has reported the UE capability indicating support of the function may perform the function. "The UE that has not reported the UE capability indicating support of the function does not perform the function (for example, follows Rel. 15/16/17)" may be defined.

When the UE reports the UE capability indicating support of the function and is configured with the higher layer parameter corresponding to the function, the UE may perform the function. "When the UE does not report the UE capability indicating support of the function or when the UE is not configured with the higher layer parameter corresponding to the function, the UE does not perform the function (for example, follows Rel. 15/16/17)" may be defined.

The UE capability may indicate whether the UE supports this function.

The function may be application of UL simultaneous transmission using a plurality of panels.

The UE capability may be defined as whether the UE supports simultaneous transmission of a plurality of (for example, two) PUCCH resources associated with different panels.

The UE capability may be defined as whether the UE supports, in one PUCCH resource, multiplexing/mapping between a plurality of CSIs/HARQ-ACKs/SRs (for example, two) associated with the same panel/different panels.

The UE capability may be defined as whether the UE supports, in one PUCCH resource, multiplexing/mapping between an SR and an HARQ-ACK (for example, two) associated with the same panel/different panels.

The UE capability may be defined as whether the UE supports, in one PUCCH resource, multiplexing/mapping between an SR and CSI (for example, two) associated with the same panel/different panels.

The UE capability may be defined as whether the UE supports, in one PUCCH resource, multiplexing/mapping between CSI and an HARQ-ACK (for example, two) associated with the same panel/different panels.

The UE capability may be defined as whether the UE supports at least one method described in the first to sixth embodiments above.

According to the other embodiments above, the UE can implement the above functions while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

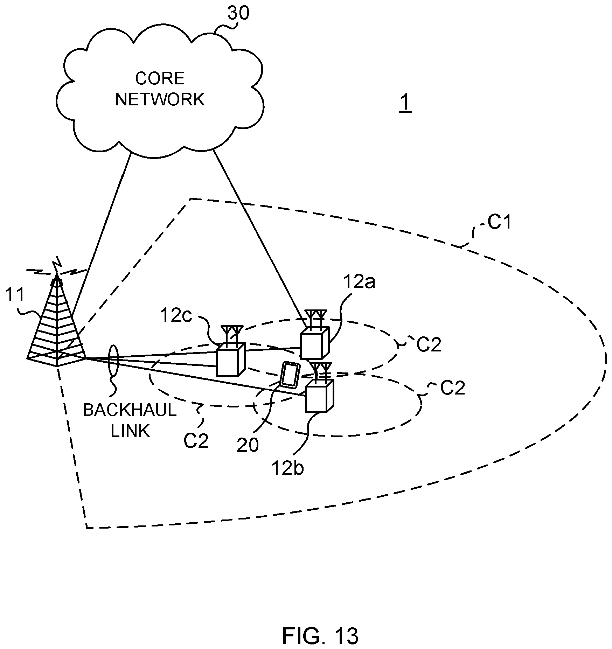

FIG. 13 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

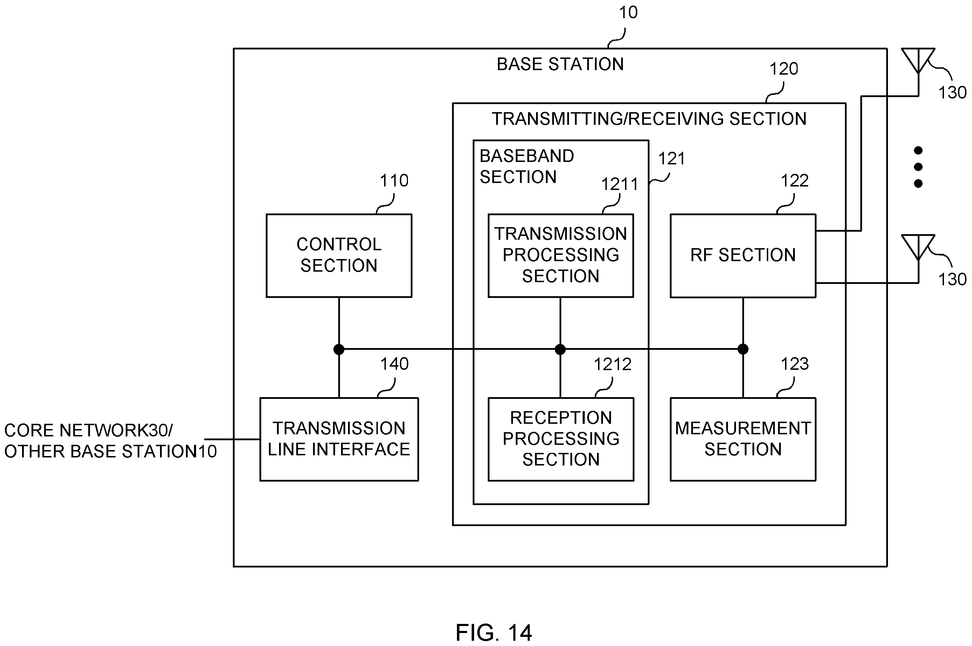

FIG. 14 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first configuration information related to a plurality of channel state informations (CSIs) and second configuration information related to simultaneous transmission of physical uplink control channels (PUCCHs) using a plurality of panels. The control section 110 may indicate, by using the first configuration information and the second configuration information, a PUCCH resource to which the plurality of CSIs in a same time domain are mapped (second embodiment).

The transmitting/receiving section 120 may transmit first configuration information related to a first hybrid automatic repeat request acknowledgement (HARQ-ACK), second configuration information related to a second HARQ-ACK or a scheduling request (SR), and third configuration information related to simultaneous transmission of physical uplink control channels (PUCCHs) using a plurality of panels. The control section 110 may indicate, by using the first configuration information, the second configuration information, and the third information, a PUCCH resource to which the first HARQ-ACK and the second HARQ-ACK or the SR in a same time domain are mapped (third and fourth embodiments).

The transmitting/receiving section 120 may transmit first configuration information related to channel state information (CSI), second configuration information related to a hybrid automatic repeat request acknowledgement (HARQ-ACK) or a scheduling request (SR), and third configuration information related to simultaneous transmission of physical uplink control channels (PUCCHs) using a plurality of panels. The control section 110 may indicate, by using the first configuration information, the second configuration information, and the third information, a PUCCH resource to which the CSI and the HARQ-ACK or the SR in a same time domain are mapped (fifth and sixth embodiments).

### (User Terminal)

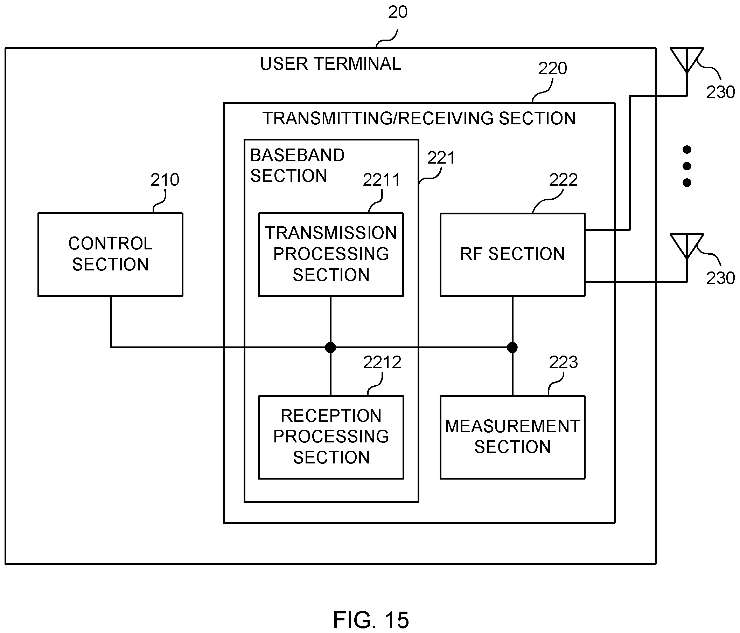

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive first configuration information related to a plurality of channel state informations (CSIs) and second configuration information related to simultaneous transmission of physical uplink control channels (PUCCHs) using a plurality of panels. The control section 210 may determine, based on the first configuration information and the second configuration information, a PUCCH resource to which the plurality of CSIs in a same time domain are mapped (second embodiment).

The number of the PUCCH resources possible to be transmitted in one slot may be based on the maximum number of PUCCH resources configurable over the plurality of panels, or the maximum number of PUCCH resources configurable in each of the plurality of panels (first embodiment).

When two CSIs of the plurality of CSIs are associated with a same panel, the control section 210 may map the two CSIs in one PUCCH resource, or need not map the two CSIs in the one PUCCH resource (second embodiment).

When two CSIs of the plurality of CSIs are associated with different panels, the control section 210 may map the two CSIs in one PUCCH resource, or need not map the two CSIs in the one PUCCH resource (second embodiment).

The transmitting/receiving section 220 may receive first configuration information related to a first hybrid automatic repeat request acknowledgement (HARQ-ACK), second configuration information related to a second HARQ-ACK or a scheduling request (SR), and third configuration information related to simultaneous transmission of physical uplink control channels (PUCCHs) using a plurality of panels. The control section 210 may determine, based on the first configuration information, the second configuration information, and the third information, a PUCCH resource to which the first HARQ-ACK and the second HARQ-ACK or the SR in a same time domain are mapped (third and fourth embodiments).

Based on whether a first control resource set (CORESET) pool index corresponding to a first PUCCH resource associated with the first HARQ-ACK and a second CORESET pool index corresponding to a second PUCCH resource associated with the second HARQ-ACK are the same, the control section 210 may assume whether the first PUCCH resource and the second PUCCH resource overlap each other in a time domain (third embodiment).

When a first PUCCH resource associated with the first HARQ-ACK and a third PUCCH resource associated with the SR are associated with a same panel, the control section 210 may determine at least one of mapping between the first HARQ-ACK and the SR and dropping of the SR, based on a first PUCCH format corresponding to the first PUCCH resource and a third PUCCH format corresponding to the third PUCCH resource (fourth embodiment).

When a first PUCCH resource associated with the first HARQ-ACK and a third PUCCH resource associated with the SR are associated with different panels, the control section 210 may determine at least one of mapping between the first HARQ-ACK and the SR and dropping of the SR, based on a first PUCCH format corresponding to the first PUCCH resource and a third PUCCH format corresponding to the third PUCCH resource (fourth embodiment).

The transmitting/receiving section 220 may receive first configuration information related to channel state information (CSI), second configuration information related to a hybrid automatic repeat request-acknowledgement (HARQ-ACK) or a scheduling request (SR), and third configuration information related to simultaneous transmission of physical uplink control channels (PUCCHs) using a plurality of panels. The control section 210 may determine, based on the first configuration information, the second configuration information, and the third information, a PUCCH resource to which the CSI and the HARQ-ACK or the SR in a same time domain are mapped (fifth and sixth embodiments).

Regardless of whether a first PUCCH resource associated with the CSI and a second PUCCH resource associated with the SR are associated with a same panel, the control section 210 may map the CSI and the SR in the first PUCCH resource (fifth embodiment).

Based on whether a first PUCCH resource associated with the CSI and a second PUCCH resource associated with the SR are associated with a same panel, the control section 210 may determine a resource to which the CSI and the SR are mapped (fifth embodiment).

Based on whether a first PUCCH resource associated with the CSI and a third PUCCH resource associated with the HARQ-ACK are associated with a same panel, the control section 210 may determine a resource to which the CSI and the HARQ-ACK are mapped (sixth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

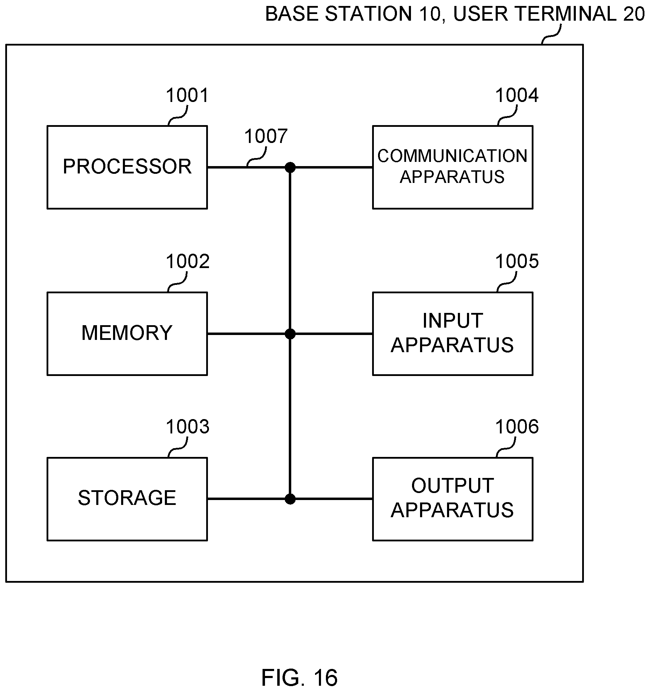

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

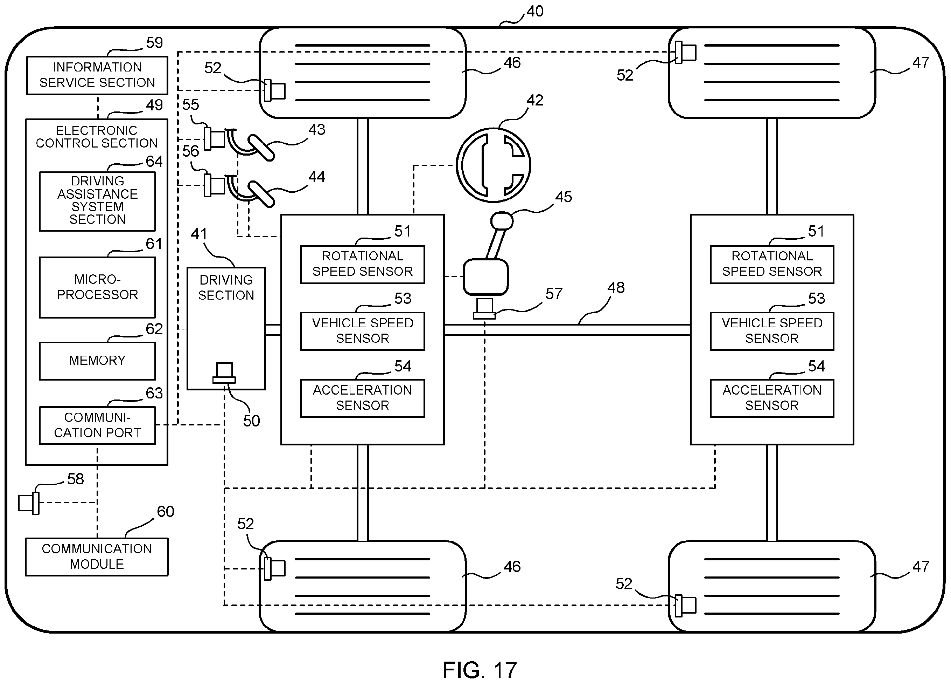

FIG. 17 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives first configuration information related to a first hybrid automatic repeat request acknowledgement (HARQ-ACK), second configuration information related to a second HARQ-ACK or a scheduling request (SR), and third configuration information related to simultaneous transmission of physical uplink control channels (PUCCHs) using a plurality of panels; and
a control section that determines, based on the first configuration information, the second configuration information, and the third information, a PUCCH resource to which the first HARQ-ACK and the second HARQ-ACK or the SR in a same time domain are mapped.

2. The terminal according to claim 1, wherein
based on whether a first control resource set (CORESET) pool index corresponding to a first PUCCH resource associated with the first HARQ-ACK and a second CORESET pool index corresponding to a second PUCCH resource associated with the second HARQ-ACK are the same, the control section assumes whether the first PUCCH resource and the second PUCCH resource overlap each other in a time domain.

3. The terminal according to claim 1, wherein
when a first PUCCH resource associated with the first HARQ-ACK and a third PUCCH resource associated with the SR are associated with a same panel, the control section determines at least one of mapping between the first HARQ-ACK and the SR and dropping of the SR, based on a first PUCCH format corresponding to the first PUCCH resource and a third PUCCH format corresponding to the third PUCCH resource.

4. The terminal according to claim 1, wherein
when a first PUCCH resource associated with the first HARQ-ACK and a third PUCCH resource associated with the SR are associated with different panels, the control section determines at least one of mapping between the first HARQ-ACK and the SR and dropping of the SR, based on a first PUCCH format corresponding to the first PUCCH resource and a third PUCCH format corresponding to the third PUCCH resource.

5. A radio communication method for a terminal, the radio communication method comprising:
receiving first configuration information related to a first hybrid automatic repeat request acknowledgement (HARQ-ACK), second configuration information related to a second HARQ-ACK or a scheduling request (SR), and third configuration information related to simultaneous transmission of physical uplink control channels (PUCCHs) using a plurality of panels; and
determining, based on the first configuration information, the second configuration information, and the third information, a PUCCH resource to which the first HARQ-ACK and the second HARQ-ACK or the SR in a same time domain are mapped.

6. A base station comprising:
a transmitting section that transmits first configuration information related to a first hybrid automatic repeat request acknowledgement (HARQ-ACK), second configuration information related to a second HARQ-ACK or a scheduling request (SR), and third configuration information related to simultaneous transmission of physical uplink control channels (PUCCHs) using a plurality of panels; and
a control section that indicates, by using the first configuration information, the second configuration information, and the third information, a PUCCH resource to which the first HARQ-ACK and the second HARQ-ACK or the SR in a same time domain are mapped.
